# EUROPEAN PATENT APPLICATION

(11) **EP 1 900 549 A1**
(43) Date of publication of application: **19.03.2008**
(21) Application number: 06120755.1
(22) Date of filing: 15.09.2006
(51) Int. Cl.: B60C 9/00

(54) **Steel filament for cap ply reinforcement**

(71) Applicant: NV Bekaert SA, 8550 Zwevegem (BE)
(72) Inventor: Lokere, Erwin, 8500, Kortrijk (BE); Pille, Johan, 8800, Roeselare (BE)
(74) Representative: Messely, Marc

(57) **Abstract**

A steel filament (122) is crimped in a wavy form or zigzag form, and the tension characteristic of the crimped steel filament (122) satisfying:
for a load which is 20% of the breaking load, the elongation must be greater than 40% of the maximum elongation;
for a load which is 80% of the breaking load, the elongation must be less than 90% of the maximum elongation. A cap ply strip (120) comprises more than one crimped steel filament (122) embedded more or less parallel to one another within an elastomeric matrix (124). A cap ply structure (118) comprises the cap ply strip (120) spirally and
continuously wound in a tire circumferential direction above the belt structure (116). A pneumatic radial tire (110) comprises the cap ply structure (116) disposed radially inward of and adjacent to the tread (114) and radially outward of and adjacent to the belt structure (116). The crimped steel filament (122), the cap ply strip (120), and the cap ply structure (116) can not only bind the belt ply but also accommodate the blowup process for the green tire.

## Description

### Field of the invention.

The present invention relates to steel filaments used to reinforce pneumatic radial tire and to the problem of belt separation due to the centrifugal force when the tire is rotating at high speed. More specifically, the present invention relates to steel filaments reinforced cap ply structure that serves to bind the belt ply, and to accommodate the blowup process for the green tires.

The present invention also relates to a cap ply strip used to reinforce pneumatic radial tire and to the problem of belt separation due to the centrifugal force when the tire is rotating at high speed. More specifically, the present invention relates to steel filaments reinforced cap ply strip that serves to bind the belt ply, and to accommodate the blowup process for the green tires.

The present invention also relates to a cap ply structure used to reinforce pneumatic radial tire and to the problem of belt separation due to the centrifugal force when the tire is rotating at high speed. More specifically, the present invention relates to steel filaments reinforced cap ply structure that serves to bind the belt ply, and to accommodate the blowup process for the green tires.

The present invention further relates to a pneumatic radial tire and to the problem of belt separation due to the centrifugal force when the tire is rotating at high speed. More specifically, the present invention relates to steel filaments reinforced cap ply structure that serves to bind the belt ply, and to accommodate the blowup process for the green tires.

### Background of the invention.

Pneumatic radial tires such as that described in GB patent No. 815,055 are conventionally well known. The tire described in this patent comprises a carcass layer having of at least one carcass ply having a plurality of cords embedded therein and substantially perpendicular to an equatorial plane of the tire, and a belt layer disposed radially outside the carcass layer and including at least one belt ply which has a large number of cords bent in wavy or zigzag form and which are arranged substantially in parallel to the equatorial plane of the tire.

In such a pneumatic radial tire, however, if it is rotating at high speed, the belt ply may separate from the carcass due to the centrifugal force. The reason is that the function of centrifugal force is F=M x ω^2 x R, while M is the mass of the object in kilogram, ω the rotational speed of the object in /s, and R the radius of the rotation in meter. The centrifugal force F is proportional to the square of the rotational speed of the object. For the same tire, the centrifugal force F when it is running at a speed of 100km/h is 4 times the centrifugal force F when it is running at a speed of 50km/h.

To offset the belt ply separation due to the centrifugal force, a cap ply is implemented between the tread and the belt ply to prevent the belt ply from lifting. For example, patent application JP19900281472 describes a cap ply made of nylon fiber reinforced strip spirally winded outside the belt ply. This invention binds the belt ply and improves the durability at high speed.

However, data show some drawbacks with the nylon fiber reinforced cap ply. Firstly, the tension characteristic of nylon fiber shows that the tension of fiber is almost linear to the elongation of the fiber. If we express the relationship between the tension and the elongation like this: δ =E x ε , while E the module of the material is a constant, which is a character to nylon fiber. Since E is small, this means if a high tension is needed, a high elongation is necessary. But for cap ply reinforcement it is not the case. When the tire is running at a high speed, the centrifugal force F increases rapidly because the centrifugal force is proportional to the square of the rotational speed of the tire, while the tension of nylon fiber increase constantly to the increase of elongation. So if the speed of tire is double, the centrifugal force is 4 times the original force, while the tension of nylon fiber increases to 4 times the original force, the elongation of nylon fiber will be 4 times the original elongation. This means the nylon fiber reinforced cap ply will extend further to exert force to counteract the centrifugal force. So technically the nylon fiber reinforced cap ply is not a best solution to bind the belt ply. Secondly, because of the small data of E, one layer of nylon fiber reinforced cap ply is not strong enough to bind the belt ply. We need multi-layer cap plies. So economically the nylon fiber reinforced cap ply is not a cost-effect solution to bind the belt ply.

So the question is to find a material with a big E, which can be embedded in an elastomeric matrix to build a cap ply to bind the belt ply. Steel filament and steel cord could be a choice but there is another challenge ahead. During the process to build a pneumatic radial tire, the green tire carcass is blown up into a toroidal carcass shape, and the circumference of the tire increases, usually around 2%, while the conventional steel filament and steel cord can not accommodate that much extension. The steel filament and steel cord will cut into the elastomeric matrix and deteriorate the performance of the tire.

So a good solution for cap ply reinforcement strip should meet two criteria:
1, at the initial elongation period, from 0% elongation to 2% elongation, the E of the reinforcing material is small, which can accommodate the blown up process of the green tire without cutting the elastomeric matrix; and
2, at the terminal elongation period, from 2% elongation to breakage, the E of the reinforcing material is big, which can exert great force to bind the belt ply when running at high speed.
Therefore, the tensile curve of preferred cap ply reinforcement strip should take the form of a "hockey stick" curve. At the initial phase, the curve is relative flat, while after a certain point, the curve rockets up abruptly.

### Summary of the invention.

The present invention relates to a steel filament crimped in a wavy form or zigzag form. The tension characteristic of the steel filament satisfies:
for a load which is 20% of the breaking load, the elongation must be greater than 40% of the maximum elongation;
for a load which is 80% of the breaking load, the elongation must be less than 90% of the maximum elongation.

The present invention also relates to a cap ply strip comprising more than one crimped filament embedded more or less parallel to one another within an elastomeric matrix.

The present invention also relates to a cap ply structure comprising a cap ply strip with crimped steel filaments embedded inside spirally and continuously wound in a tire circumferential direction above the belt structure.

The present invention further relates to a pneumatic radial tire having a tread, a carcass, a belt structure located between the tread and carcass, and a cap ply structure reinforced by crimped steel filaments disposed radially inward of and adjacent to the tread and radially outward of and adjacent to the belt structure.

From the above description, we can see that the tensile curve of crimped steel filaments takes the form of a "hockey stick" curve.
Since the elastomric matrix is easy to extend with a small E, the tensile curve of cap ply strip with crimped steel filaments embedded shares the same form of a "hockey stick" curve. At the initial phase, the curve is relative flat, while after a certain point, the curve rockets up abruptly. Since the crimped filaments can have a big elongation, more than 40% of the maximum elongation, at a load which is 20% of the breaking load, the cap ply reinforcement strip with crimped filaments can accommodate the blow up process of green tire. Thereafter, the crimped filaments can exert great force to against belt ply lift up with little elongation. Therefore, the cap ply strip with crimped steel filaments can not only bind the belt ply firmly when the tire is running at high speed, but also accommodate the blow up process of green tire during the tire manufacturing process.

### Brief description of the drawings.

The invention will now be described into more detail with reference to the accompanying drawings wherein
- FIGURE 1 is a cross-sectional view of a prior art design incorporating nylon fiber reinforced cap ply;
- FIGURE 2 is a cross-sectional view of a pneumatic radial tire incorporating the present invention;
- FIGURE 3 is a schematic diagram showing the shape of crimped steel filaments embedded in a elastomeric matrix;
- FIGURE 4 is a cross-sectional view of a cap ply strip according to the present invention;
- FIGURE 5 is the tensile curves of crimped steel filaments with different process data;
- FIGURE 6 is the comparison between the tensile curves of cap ply strips with crimped steel filaments and the tensile curves of crimped steel filaments;
- FIGURE 7 is the comparison between the tensile curves of cap ply strips reinforced with crimped steel filaments and the tensile curves of cap ply strips reinforced with nylon fibers;
Item 10 is a pneumatic radial tire with prior art.
Item 12 is the carcass of the pneumatic radial tire with prior art.
Item 14 is the tread of the pneumatic radial tire with prior art.
Item 16 is the belt structure of the pneumatic radial tire with prior art.
Item 18 is the cap ply structure of the pneumatic radial tire with prior art.
Item 20 is the cap ply strip of the pneumatic radial tire with prior art.
Item 22 is the nylon fiber embedded in the cap ply strip of the pneumatic radial tire with prior art.
Item 24 is the elastomeric matrix for the cap ply strip of the pneumatic radial tire with prior art.
Item 110 is a pneumatic radial tire incorporating present invention.
Item 112 is the carcass of the pneumatic radial tire incorporating present invention.
Item 114 is the tread of the pneumatic radial tire incorporating present invention.
Item 116 is the belt structure of the pneumatic radial tire incorporating present invention.
Item 118 is the cap ply structure of the pneumatic radial tire incorporating present invention.
Item 120 is the cap ply strip of the pneumatic radial tire incorporating present invention.
Item 122 is the steel filament embedded in the cap ply strip of the pneumatic radial tire incorporating present invention.
Item 124 is the elastomeric matrix for the cap ply strip of the pneumatic radial tire incorporating present invention.
Item 501 is the tensile curve of crimped steel filament with diameter of 0.175mm, amplitude of 0.43mm, and wavelength of 6.6mm.
Item 502 is the tensile curve of crimped steel filament with diameter of 0.175mm, amplitude of 0.63mm, and wavelength of 6.6mm.
Item 503 is the tensile curve of crimped steel filament with diameter of 0.175mm, amplitude of 0.83mm, and wavelength of 6.6mm.
Item 504 is the tensile curve of crimped steel filament with diameter of 0.225mm, amplitude of 0.58mm, and wavelength of 6.6mm.
Item 505 is the tensile curve of crimped steel filament with diameter of 0.225mm, amplitude of 0.58mm, and wavelength of 10mm.
Item 506 is the tensile curve of crimped steel filament with diameter of 0.225mm, amplitude of 0.88mm, and wavelength of 10mm.
Item 507 is the tensile curve of crimped steel filament with diameter of 0.225mm, amplitude of 1.18mm, and wavelength of 10mm.
Item 508 is the tensile curve of crimped steel filament with diameter of 0.225mm, amplitude of 1.28mm, and wavelength of 14mm.
Item 509 is the tensile curve of crimped steel filament with diameter of 0.30mm, amplitude of 0.90mm, and wavelength of 14mm.
Item 510 is the tensile curve of crimped steel filament with diameter of 0.30mm, amplitude of 1.20mm, and wavelength of 14mm.
Item 511 is the tensile curve of crimped steel filament with diameter of 0.30mm, amplitude of 1.50mm, and wavelength of 14mm.
Item 601 is the tensile curve of crimped steel filament with diameter of 0.225mm, amplitude of 0.58mm, and wavelength of 10mm.
Item 602 is the tensile curve of cap ply strip with 6 crimped steel filaments with diameter of 0.225mm, amplitude of 0.58mm, and wavelength of 10mm.
Item 603 is the tensile curve of cap ply strip with 10 crimped steel filaments with diameter of 0.225mm, amplitude of 0.58mm, and wavelength of 10mm.
Item 701 is the tensile curve of nylon cap ply strip.
Item 702 is the tensile curve of cap ply strip with 6 crimped steel filaments with diameter of 0.225mm, amplitude of 0.58mm, and wavelength of 10mm.

D is the diameter of the steel filament crimped in a wavy or zigzag form. WL is the wavelength of the steel filament crimped in a wavy or zigzag form.
A is the amplitude of the steel filament crimped in a wavy or zigzag form.
TH is the thickness of the cap ply strip.
Wl is the width of the cap ply strip.
F(N) is the force in Newton on the test specimen.
E(%) is the elongation in percentage of the test specimen.

### Description of the preferred embodiments of the invention.

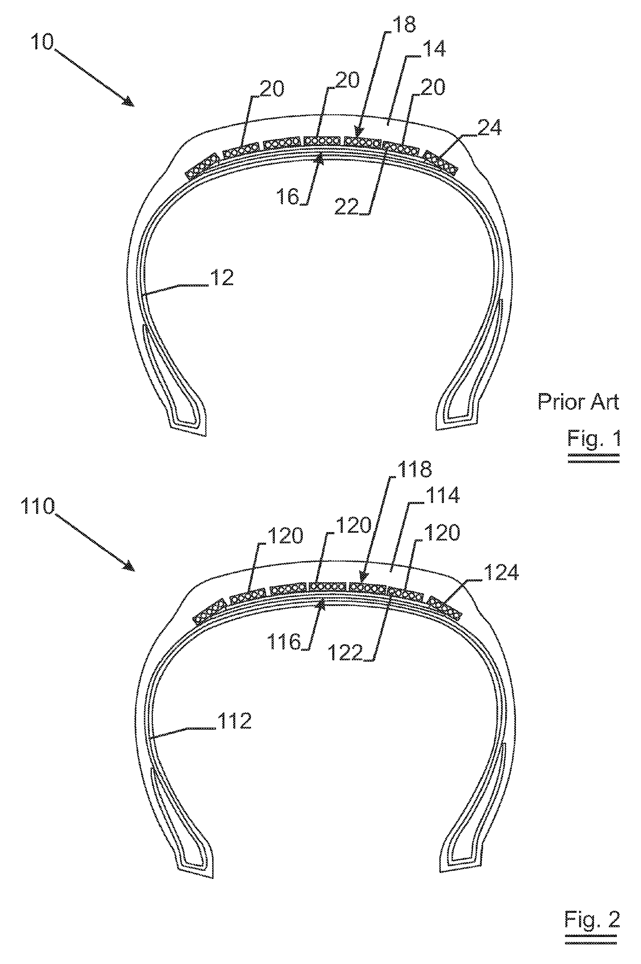

In FIGURE 1, there is shown in cross section view of a prior art design incorporating nylon fiber reinforced cap ply. The pneumatic radial tire 10 has a tread 14, a carcass 12, a belt structure 16 located between the tread and carcass, and a cap ply structure 18 disposed radially inward of and adjacent to the tread and radially outward of and adjacent to the belt structure. The cap ply structure 18 is comprised of a single flat cap ply strip 20 spirally and continuously wound in a tire circumferential direction above the belt structure. The flat cap ply strip 20 is comprised of a plurality of nylon fibers 22 embedded more or less parallel to one another within an elastomeric matrix 24.

As shown in FIGURE 2, there is a cross section view of a pneumatic tire incorporating the present invention. The pneumatic radial tire 110 has a tread 114, a carcass 112, a belt structure 116 located between the tread and carcass, and a cap ply structure 118 disposed radially inward of and adjacent to the tread and radially outward of and adjacent to the belt structure. The cap ply structure 118 is comprised of a single flat cap ply strip 120 spirally and continuously wound in a tire circumferential direction above the belt structure. The flat cap ply strip 120 is comprised of a plurality of steel filaments 122, crimped in a wavy form or zigzag form, embedded more or less parallel to one another within an elastomeric matrix 124.

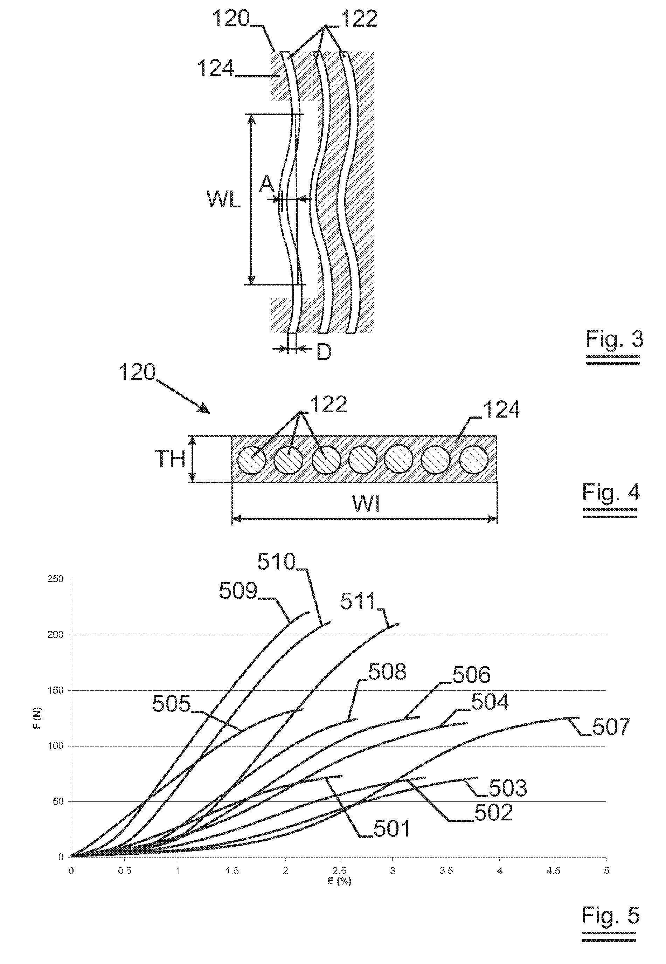

As shown in FIGURE 3, there is a schematic diagram showing the shape of crimped steel filaments 122, which are crimped in a wavy form or zigzag form and embedded more or less parallel to one another within an elastomeric matrix 124.

The diameter D of the crimped steel filaments 122 is between about 0.15mm and 0.30mm, and preferably between about 0.20mm and 0.275mm. If the diameter of the crimped steel filaments is smaller than 0.15mm, the probability of cutting through the rubber by the steel filaments increases, which will deteriorate the performance of cap ply. If the diameter of the crimped steel filaments is bigger than 0.30mm, we need thicker rubber strip to embed the steel filaments. But a thicker rubber strip means extra rubber between cap ply and belt ply and thinner tread ply, which will deteriorate the performance of the tire.

The amplitude A of the crimped steel filaments 122 is between about 0.4mm and 1.6mm, and preferably between about 0.6mm and 1.2mm. If the amplitude of the crimped steel filaments is smaller than 0.4mm, the construction elongation in the initial phase is too small to accommodate the blow up process for green tire. If the amplitude of the crimped steel filaments is bigger than 1.6mm, on one hand, the construction elongation is more than necessary and will decrease the strength of the cap ply strip. On the other hand, big amplitude may decrease the placing density of the crimped steel filaments in the cap ply strip, which will further decrease the strength of the cap ply strip.

The wavelength WL of the crimped filaments 122 is between about 6mm and 14mm, and preferably between about 8mm and 12mm. If the wavelength is smaller than 6mm, the construction elongation is more than necessary and will decrease the strength of the cap ply strip. Even though, we can add more steel filaments to compensate, it is not a cost effect choice. If the wavelength is bigger than 14mm, the construction elongation in the initial phase is too small to accommodate the blow up process for green tire.

As shown in FIGURE 4, there is a cross-sectional view of a cap ply strip according to the present invention. The cap ply strip 120 is comprised of a plurality of steel filaments 122 embedded more or less parallel to one another within an elastomeric matrix 124.

The thickness TH of the cap ply strip 120 is between about 0.35mm and 1.1 mm, and preferably between 0.45mm and 1.0mm. The reason is that the thickness of cap ply strip is smaller than 0.35mm or bigger than 1.1 mm will deteriorate the tire performance. If the thickness of the cap ply strip is smaller than 0.35mm, there is a higher probability that the filaments inside the cap ply strip will touch the steel cords inside the belt ply, which will cut through the rubber and deteriorate the tire performance. If the thickness of the cap ply strip is bigger than 1.1 mm, the extra rubber layer between cap ply strip and the belt ply will offset the bind force on the belt ply, and at the same time, extra rubber layer between cap ply strip and the belt ply means a thinner tread ply, if we want to keep the same specification of the tire. Comparatively, a thinner tread ply will deteriorate the comfort of driving.

The width of the cap ply strip 120 is between about 5mm and 20mm, and preferably between 8mm and 15mm. The reason is that if the width of the cap ply strip is smaller than 5mm, it will take more time to wind the strip above the belt structure. Therefore, the productivity with narrower strip is low. Comparatively, the choice to make a cap ply strip narrower than 5mm is not a cost effect solution. If the width of the cap ply strip is bigger than 20mm, there will be other drawbacks related to this design. Either we leave a big space of the belt structure uncovered at the both ends of the shoulder, which leaves some area of belt structure un-bound, or we have a big overlap of cap ply strip to cover the ends of the belt structure, which will cause the non-uniformity of cap ply structure. Therefore, a broader cap ply strip is also not a good solution.

The placing density of crimped steel filaments 122 comprised in cap ply strip 120 is between 5 and 20 filaments every 10mm, and preferably 7 and 15 filaments every 10mm. If the placing density is less than 5 filaments every 10mm, the strength of the strip is too weak to bind the belt ply. If the placing density is more than 20mm every 10mm, the crimped filaments inside the cap ply reinforcement strip may touch each other, and cut through the rubber, which will also deteriorate the performance of cap ply.

A further improvement to the present invention is characterized by the placing pattern of the steel filaments 122 inside the elastomeric matrix 124. If we place the steel filaments in phase, the peaks of one filament matches the peaks of other filaments and the valleys of one filament matches the valleys of other filaments, as shown in FIGURE 3, we can place more crimped steel filaments, and increase the placing density of crimped steel filaments, which will build a stronger cap ply strip with crimped steel filaments evenly distributed and never touch each other. This improvement is more valuable for the cap ply strip used for High Performance tires and Ultra High Performance tires, because firstly the strong cap ply strip can hold the belt structure firmly and keep the tire in a good shape even the tire is running at a high speed, and secondly the evenly distributed steel filaments make the cap ply strip more uniform and exert same force on the tire.

Another improvement to the present invention is characterized by the location of the steel filaments 122 inside the elastomeric matrix 124. The steel filaments can be placed in an asymmetric way. Extra elastomeric matrix below the steel filaments will guarantee that the cap ply steel filaments do not cut through the elastomeric matrix and touch the steel cords in the belt structure. Extra elastomeric matrix over the steel filaments will guarantee that the cap ply steel filaments do not extrude into the grooves in the tread. This improvement will improve the quality of the process and pneumatic radial tire.

In FIGURE 5, there are the tensile curves of crimped steel filaments with different process data. The drawing shows that tensile curves take the form of a "hockey stick" curve, but the tension characteristic of crimped steel filaments with different process data is quiet different. Crimped steel filaments with normal tensile will have a flat curve, while crimped steel filaments with high tensile will have a rather steep curve. Crimped steel filaments with big diameter will have a steep curve, while crimped steel filaments with small diameter will have a flat curve. Crimped steel filaments with big amplitude will have an extended flat curve at the initial phase, while crimped steel filaments with small amplitude will have a shorter flat curve at the initial phase. Crimped steel filaments with small wavelength will have an extended flat curve at the initial phase, while crimped steel filaments with big wavelength will have a shorter flat curve at the initial phase.

According to the two criteria of cap ply reinforcement strip, only does work those cap ply strip with steel filaments' tensile characteristic satisfying:
for a load which is 20% of the breaking load, the elongation must be greater than 40% of the maximum elongation;
for a load which is 80% of the breaking load, the elongation must be less than 90% of the maximum elongation.
Because the crimped steel filaments can achieve more than 40% of the maximum elongation at a load which is 20% of the breaking load, the E of the crimped steel filaments at the initial elongation period is small, which can accommodate the blown up process of the green tire. Because the crimped steel filaments can achieve less than 90% of the maximum elongation at a load which is 80% of the breaking load, the E of the crimped steel filaments at the terminal elongation period is big, which can exert great force to bind the belt ply.

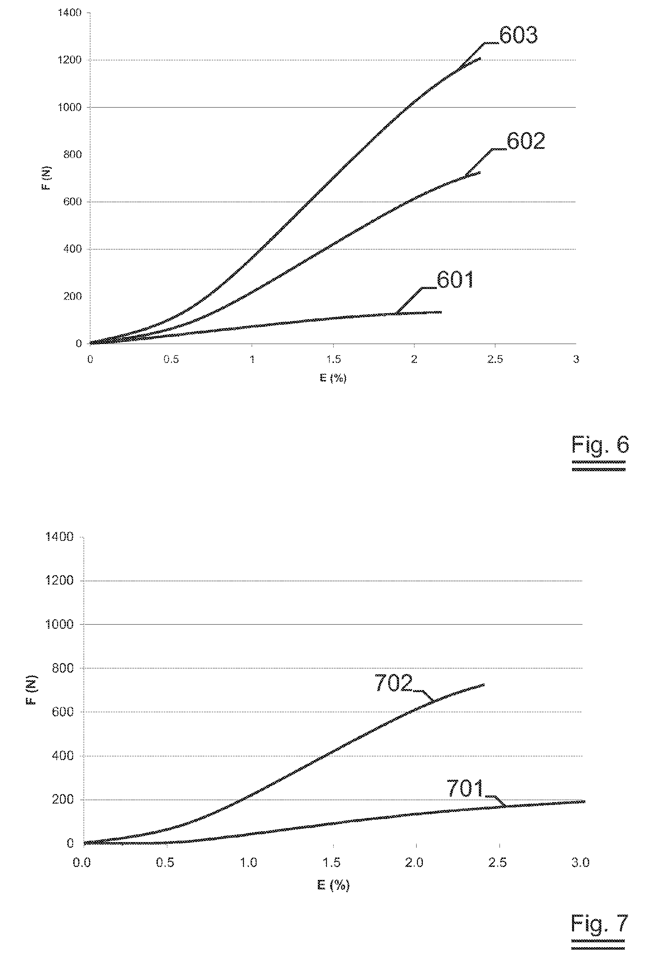

As shown in FIGURE 6, there is the comparison between the tensile curves of cap ply strips with crimped steel filaments and the tensile curve of crimped steel filament. Since the elastomeric matrix is easy to extend with a small E, the tensile curve of cap ply strip with crimped steel filaments embedded shares the same form of a "hockey stick" curve, and the tension of the strip is almost N times the tension of the crimped steel filament at the same elongation, while N is the number of crimped steel filaments embedded in the elastomeric matrix. Therefore, the placing density or the number of the crimped steel filaments and the tension character of the crimped steel filaments will define the tension character of the cap ply strip.

The following table shows one of the best embodiments with the process data of the cap ply strip incorporating the present invention:

| Diameter of filament | Amplitude of filament | Wavelength of filament |
|---|---|---|
| 0.225mm | 0.58mm | 10mm |
| Thickness of strip | Width of strip | Placing density of strip |
| 0.75mm | 10mm | 10 filaments / 10 mm |

As shown in FIGURE 7, there is a comparison between the tensile curve of cap ply strip reinforced with crimped steel filaments and the tensile curve of cap ply strip reinforced with nylon fiber. It shows that the tensile curve of cap ply strip reinforced with crimped steel filaments takes the form of a "hockey stick" curve, while the tensile curve of cap ply strip reinforced with nylon fiber is flat, the tension increases linearly with the increase of elongation.

Compared with prior arts that using nylon fiber reinforced cap ply strip, the present invention has a lot of advantages:

As shown in FIGURE 7, the longitudinal stiffness of steel filaments reinforced cap ply strip is 3 times that of nylon fiber strip at the same elongation. Therefore, one layer of steel filaments strip can replace 2-3 layers of nylon fiber strip. This replacement brings:
1, cost savings from material replacements;
2, boosted productivity of tire manufacturing process because of shorter time to wind the cap ply strip over the belt ply;
3, reduction of the thickness of cap ply, and leave more space to design tires that meet different requirements, and to build a thicker tread ply to improve the comfort of driving;
4, independent temperature mechanical behavior, because steel filaments do not extend a lot when the tire is heating up due to high speed running,
5, improved heat transmission during vulcanization and high speed running, because steel filaments are good conducts for heat;
6, no more flat spotting, because steel filaments are stronger than nylon fibers. The cap ply strip with steel filaments can exert great force on the belt structure and help to keep the tire in a good shape during and after the high speed running. Besides, steel filaments do not creep when heated and can resume the original length when cool down. Therefore, the problem of flat spotting with nylon fiber reinforced cap ply structure due to the creep of nylon fiber under temperature and tension can be eliminated if the cap ply structure is reinforced by steel filaments.

Besides, since the performance of cap ply strip is highly related to the process data of steel filaments and the placing density of steel filaments embedded in the elastomeric matrix, it is possible to use different process data to accommodate different tire size. For example, for bigger tires a thicker and wider cap ply strip reinforced by more crimped steel filaments with bigger diameter, bigger amplitude and wavelength will be a cost-effect choice, while for smaller tires the choice is opposite. Furthermore, it is possible to use different process data to accommodate different tire manufacturing process. For example, a cap ply strip reinforced by crimped steel filaments with bigger diameter, small amplitude and bigger wavelength has lower construction elongation, which is suitable to accommodate smaller extension, such as 1.7%, of the blow up process of green tire. Conversely, cap ply strips reinforced by crimped steel filaments with smaller diameter, bigger amplitude and smaller wavelength have higher construction elongation, which is suitable to accommodate bigger extension, such as 2.6% of the blow up process of green tire. Therefore, cap ply strip reinforced by crimped steel filaments is more flexible than cap ply strip reinforced by nylon fibers to accommodate different tire manufacturing process and tire size.

Last but not the least, since the longitudinal stiffness of steel filaments reinforced cap ply strip is 3 times that of nylon fibers reinforced strip at the same elongation. Pneumatic radial tire with steel filaments reinforced cap ply is more apt to keep a good shape when running on the road. This will further improve the tire stability at high speed, and this benefit is more important for High Performance tires and Ultra High Performance tires.

A wavy steel filament can be made as follows:
Wire rod forms the starting material. Wire rod has a typical composition along the following lines : a carbon content ranging from 0.60 % to 1.25 %, a manganese content ranging from 0.10 % to 1.10 %, a silicon content ranging from 0.10 % to 0.90 %, sulfur and phosphorous contents being limited to 0.15 %, preferably to 0.10 % ; additional micro-alloying elements such as chromium (up to 0.20 % - 0.40 %), copper (up to 0.20 %), vanadium (up to 0.30 %) and boron may be added.

The wire rod is drawn in a first series of dry drawing steps into a steel wire with an intermediate diameter. This steel wire is then subjected to a heat treatment such as patenting in order to allow for further drawing. The steel wire can be coated with a brass coating, e.g. by means of a diffusion process applied to a zinc and a copper coating.
The brass coated steel wire is then drawn until a steel filament with a final filament diameter.
The steel filament is then driven between a pair of toothed wheels in order to obtain the suitable amplitude and wave length as described hereabove.

The strip can be obtained by means of extrusion or by means of vulcanizing rubber around a plurality of steel filaments positioned parallel to each other.

The invention is independent of the level of tensile strength. For a final filament diameter of 0.225 mm, the tensile strength of the final steel filament may vary between 2000 MPa and 5000 MPa.

The elastomeric matrix in which the steel filament embedded can be the material suitable to build pneumatic radial tires, such as rubber. To accommodate fine steel filaments, the rubber with cut-resistant ability will be a good material to embed the crimped steel filaments.

## Claims

1. A steel filament crimped in a wavy form or zigzag form, said steel filament being **characterized by**: the tension characteristic of the steel filament satisfying:
for a load which is 20% of the breaking load, the elongation must be greater than 40% of the maximum elongation;
for a load which is 80% of the breaking load, the elongation must be less than 90% of the maximum elongation.

2. A steel filament as claimed in claim 1, **characterized in that** the diameter D of said steel filament is between about 0.15mm and 0.30mm.

3. A steel filament as claimed in claim 2, **characterized in that** the diameter D of said steel filament is between about 0.20mm and 0.275mm.

4. A steel filament as claimed in claim 1, **characterized in that** the amplitude A of said steel filament in a wavy form or zigzag form is between about 0.4mm and 1.6mm.

5. A steel filament as claimed in claim 4, **characterized in that** the amplitude A of said steel filament in a wavy form or zigzag form is between about 0.6mm and 1.2mm.

6. A steel filament as claimed in claim 1, **characterized in that** the wavelength WL of said steel filament in a wavy form or zigzag form is between about 6mm and 14mm.

7. A steel filament as claimed in claim 6, **characterized in that** the wavelength WL of said steel filament in a wavy form or zigzag form is between 8mm and 12mm.

8. A cap ply strip comprising more than one filament as claimed in claim 1 to 7 embedded more or less parallel to one another within an elastomeric matrix.

9. A cap ply strip as claimed in claim 8, **characterized in that** the thickness TH of said cap ply strip is between about 0.35mm and 1.1 mm.

10. A cap ply strip as claimed in claim 9, **characterized in that** the thickness TH of said cap ply strip is between about 0.45mm and 1.0mm

11. A cap ply strip as claimed in claim 8, **characterized in that** the width WI of said cap ply strip is between about 5mm and 20mm.

12. A cap ply strip as claimed in claim 11, **characterized in that** the width WI of said cap ply strip is between about 8mm and 15mm.

13. A cap ply strip as claimed in claim 8, **characterized in that** the placing density of the steel filaments comprised in said cap ply strip is between 5 and 20 filaments every 10mm.

14. A cap ply strip as claimed in claim 13, **characterized in that** the placing density of the steel filaments comprised in said cap ply strip is between 7 and 15 filaments every 10mm.

15. A cap ply reinforcement structure comprising a cap ply strip as claimed in claim 8 to 14 spirally and continuously wound in a tire circumferential direction above the belt structure.

16. A pneumatic radial tire having a tread, a carcass, a belt structure located between the tread and carcass, and a cap ply reinforcement structure as claimed in claim 15 disposed radially inward of and adjacent to the tread and radially outward of and adjacent to the belt structure.
